**Europäisches Patentamt**

**European Patent Office**

**Office européen des brevets**

(19)

(11) Numéro de publication : **0 618 698 A1**

(12) **DEMANDE DE BREVET EUROPEEN**

(21) Numéro de dépôt : **94400645.1**

(22) Date de dépôt : **25.03.94**

(51) Int. Cl.⁵ : **H04L 7/00**

(30) Priorité : **29.03.93 FR 9303592**

(43) Date de publication de la demande :
**05.10.94 Bulletin 94/40**

(84) Etats contractants désignés :
**DE GB**

(71) Demandeur : **FRANCE TELECOM**
**Etablissement autonome de droit public,**
**6, Place d'Alleray**
**F-75015 Paris (FR)**

(72) Inventeur : **Auffret, René**
**48, Côte de Kernu**
**F-22700 Perros Guirec (FR)**
Inventeur : **Pottier, Patrice**
**La Bellerie Domalain**
**F-35680 Bais (FR)**
Inventeur : **Claveau, Georges**
**La Gare Saint Nicolas**
**F-22450 Camlez (FR)**

(74) Mandataire : **Dubois-Chabert, Guy et al**
**Société de Protection des Inventions**
**25, rue de Ponthieu**
**F-75008 Paris (FR)**

(54) **Dispositif optique de récupération du rythme d'un signal codé.**

(57)    L'invention concerne un dispositif optique de récupération du rythme d'un signal codé (Si) par un code numérique tel que le code NRZ, CMI, biphase, etc... Ce dispositif comporte
. un circuit (1) de mise en forme du signal codé qui transforme le signal codé sous la forme d'une série d'impulsions de durée égale à N x T/2 et d'occurence égale à N x T,
. un circuit (19) de récupération du rythme apte à déterminer le signal de rythme recherché.
    Application à la transmission numérique par fibres optiques.

FIG. 3

EP 0 618 698 A1

## Domaine technique

La présente invention a pour objet un dispositif optique permettant de récupérer le rythme (que l'on appelle aussi horloge) d'un signal codé par un code numérique. Elle trouve de nombreuses applications dans le domaine de la transmission numérique par fibres optiques.

## Etat de la technique

Dans la plupart des systèmes de transmission numérique, il est nécessaire de pouvoir resynchroniser, à sa réception, le signal d'information transmis sous forme numérique afin de lire l'information qu'il contient. De nombreux dispositifs électroniques pouvant récupérer l'horloge du signal d'information (c'est-à-dire l'horloge du signal codé qu'ils reçoivent) sont connus. Cependant, lorsque le système de transmission est de type optique (transmission par fibres optiques), il est souvent important d'assurer la continuité optique dans le système. Un dispositif optique de récupération de l'horloge doit alors être utilisé.

Le document de D.J. AS, R. EGGEMANN et al. intitulé "Clock revery based on a new type of selfpulsation in a 1,5 μm two-section InGaAsP-InP DFB laser", publié dans Electronics Letters, 21st January 1991, vol. 29, n° 2, décrit un tel dispositif optique de récupération d'horloge. Ce dispositif, qui utilise des diodes laser à contre-réaction, a pour principal inconvénient de ne permettre la récupération d'horloge qu'à partir de signaux codés par le code RZ (Retour à Zéro) pour lequel chaque bit d'information (bit à l'état "1") du signal a une durée équivalant à une demi-période d'horloge.

## Exposé de l'invention

La présente invention a justement pour but de remédier à cet inconvénient. A cette fin, elle propose un dispositif optique de récupération de l'horloge de signaux codés selon différents codes numériques tels que le code NRZ (Non Retour à Zéro) où chaque bit d'information à "1" a une durée d'une période d'horloge, le code CMI (Code Mark Inversion) où les bits d'infomation sont codé alternativement "01" et "10", le code biphase, etc...

Afin de permettre la récupération d'horloge de signaux pouvant être codés selon une multitude de codes numériques, le dispositif de l'invention comporte, en amont du circuit de récupération du rythme, un circuit de mise en forme du signal codé reçu. Ce circuit de mise en forme transcrit le signal codé sous la forme d'une série d'impulsions répondant aux conditions suivantes :

- les impulsions ont une durée égale à une demi-période d'horloge (T/2);

- les impulsions ont une occurence variable, égale à NxT, où N est un nombre entier variant en fonction du code numérique utilisé pour coder le signal codé. De façon plus précise, l'invention concerne un dispositif optique de récupération du rythme d'un signal codé par un code numérique et transmis audit dispositif au moyen de liaisons en fibres optiques pour fournir un signal de rythme. Ce dispositif comporte :
- un circuit de mise en forme du signal codé apte à transcrire ledit signal codé sous la forme d'une série d'impulsions de durée égale à N x T/2, où T est la période du rythme du signal codé et N est un nombre entier variant en fonction du code numérique codant le signal codé, et d'occurence égale à NxT, ce circuit comportant une entrée apte à recevoir le signal codé et une sortie apte à fournir la série d'impulsions ; et
- Un circuit de récupération du rythme qui comprend une première et une seconde entrées et une première et une seconde sorties, la première entrée étant connectée sur la sortie du circuit de mise en forme et la première sortie étant connectée sur la seconde entrée pour former une boucle de contre-réaction ; ce circuit de récupération du rythme est apte, de plus, à déterminer, pour chaque période du rythme, une fraction du signal se propageant dans la boucle de contre-réaction pour fournir, sur la seconde sortie, cette fraction de signal correspondant au signal de rythme.

Avantageusement, le circuit de mise en forme du signal codé comporte un interféromètre de retard R = N x T/2 pour transformer le signal codé en un signal modulé en amplitude.

De préférence, l'interféromètre est un interféromètre de MACH-ZEHNDER, réalisé en fibres optiques.

Selon l'invention, le circuit de mise en forme du signal codé comporte un convertisseur AM/FM associé en série à l'interféromètre, pour convertir le signal modulé en amplitude en un signal modulé en fréquence.

Ce convertisseur AM/FM est, de préférence, un convertisseur laser.

Un filtre optique peut, en outre, être associé en série au convertisseur AM/FM, et être ajusté sur l'une des fréquences du signal modulé en fréquence pour assurer l'établissement d'une fonction logique, le choix de la fonction logique à établir dépendant du code numérique du signal codé.

Selon un mode de réalisation préféré de l'invention, le circuit de récupération du rythme comporte un coupleur deux vers deux permettant d'introduire les impulsions provenant du circuit de mise en forme du signal codé et de réaliser la boucle de contre-réaction.

De préférence, le coupleur deux vers deux est réalisé en fibres optiques.

De façon avantageuse, le circuit de récupération du rythme comporte un amplificateur et un filtre optique associés en série dans la boucle de contre-réaction.

Selon une caractéristique de l'invention, le dispositif de récupération de rythme peut comporter un égaliseur optique connecté sur la seconde sortie du circuit de récupération.

### Brève description des dessins

- La figure 1 représente, de façon schématique, le circuit de mise en forme du signal codé ;
- la figure 2 représente un mode de réalisation du générateur de fonctions logiques ;
- la figure 3 représente schématiquement le circuit de récupération de rythme connecté en sortie du circuit de mise en forme ;
- la figure 4 illustre les différents signaux obtenus au cours du traitement par le dispositif de l'invention : A et B représentent les signaux utilisés par l'interféromètre ; C, le signal modulé en amplitude sur trois niveaux ; D, le signal modulé en fréquence ; E, le signal modulé en amplitude sur deux niveaux ; F, montre les impulsions obtenues en sortie du circuit de mise en forme ; et G, le signal de rythme.

### Exposé détaillé de modes de réalisation

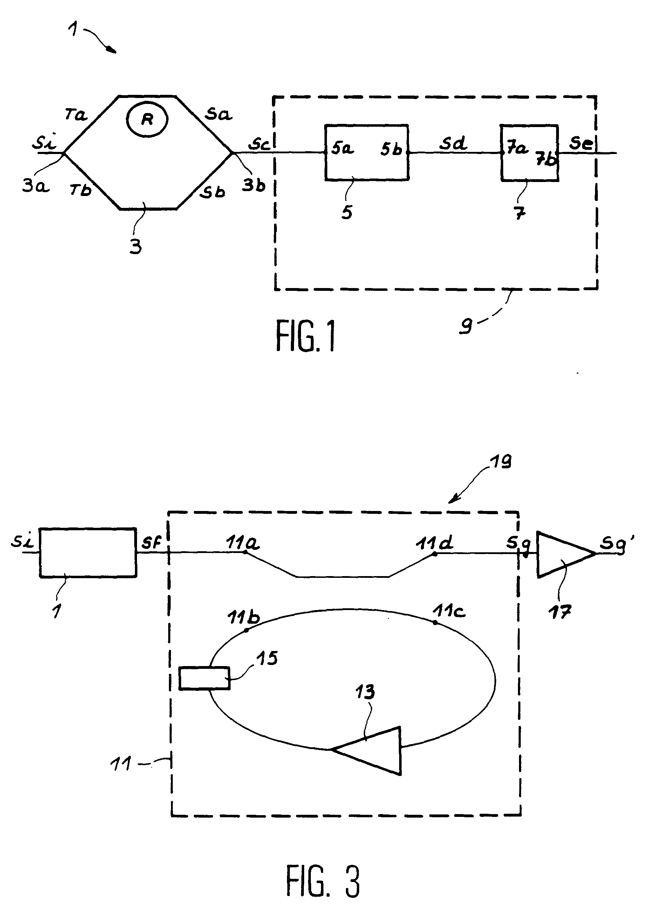

Sur la figure 1, on a représenté schématiquement le circuit de mise en forme du signal codé reçu par le dispositif selon l'invention. Ce circuit de mise en forme du signal codé est référencé 1 ; on écrira donc indifféremment, dans la suite de la description, circuit 1 et circuit de mise en forme du signal codé.

Ce circuit de mise en forme du signal codé comporte un interféromètre 3. Le signal codé selon l'un quelconque des codes numériques connus (codes RZ, NRZ, CMI, Biphase, etc...) est introduit dans le circuit de mise en forme par l'entrée 3a de l'interféromètre 3. Ce signal codé par un code numérique, appelé également signal initial, est référencé Si. Ce signal Si est donc injecté dans l'interféromètre 3, qui est, de préférence, un interféromètre de MACH-ZEHNDER. Cet interféromètre de MACH-ZEHNDER a pour avantage d'être facilement réalisable en fibres optiques. Aussi, selon le mode de réalisation préféré de l'invention, l'interféromètre 3 est réalisé en fibres optiques de façon à permettre la continuité de la propagation du signal Si transmis au dispositif 1 par des liaisons en fibres optiques.

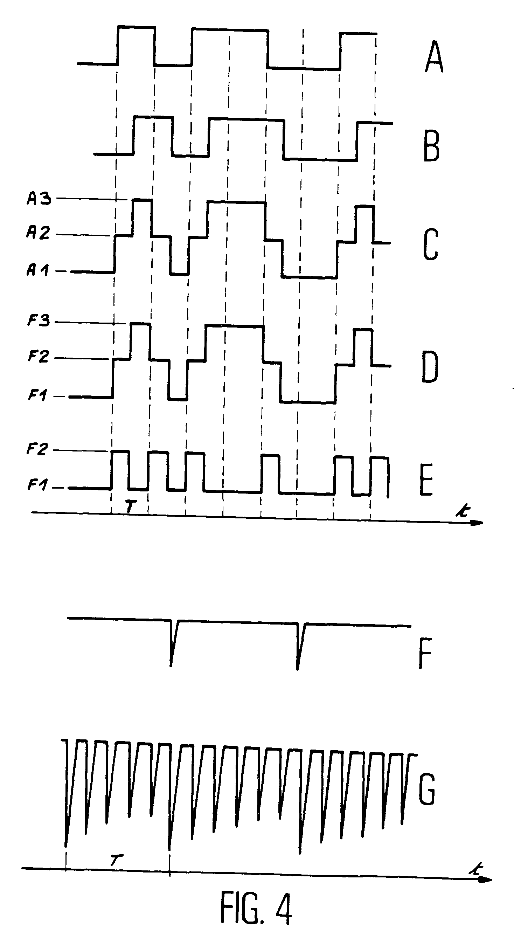

Le signal Si, lorsqu'il est introduit dans l'interféromètre 3, est apte à suivre deux trajets, à savoir le trajet Ta et le trajet Tb. Le retard R entre les deux trajets, c'est-à-dire la différence de marche entre les trajets Ta et Tb, est égale à sensiblement T/2. Les signaux utilisés dans l'interféromètre pour le trajet Ta et pour le trajet Tb sont, respectivement, référencés Sa et Sb. Ces signaux Sa et Sb sont représentés sur la figure 3 ci-jointe que l'on décrira plus en détail dans la suite de la description. Ces signaux Sa et Sb sont décalés d'environ une demi-période T/2 par l'interféromètre. De cette façon, le signal Sc obtenu à la sortie 3b de l'interféromètre 3 est le signal résultant des signaux Sa et Sb. Ce signal optique Sc comporte alors trois niveaux d'amplitude, A1, A2, A3, comme cela est montré sur la figure 3.

Cependant, afin d'éviter toute interférence, c'est-à-dire tout battement optique des deux signaux Sa et Sb en sortie, il est préférable d'augmenter le retard R de façon à ce que :

$$R = N \times T/2 > r \times Lc$$

où N est un nombre entier, T est le temps de propagation des signaux dans la fibre (sensiblement de 5 ns/m) et Lc est la longueur de cohérence de la porteuse optique avec

$$Lc = \frac{\lambda^2}{\delta\lambda} \times \frac{c}{\delta\upsilon \times n}$$

où $\lambda$ est la longueur d'onde de la porteuse optique,

$\delta\lambda$ est l'encombrement spectral,

c est la vitesse de la lumière,

$\delta\upsilon$ est l'encombrement fréquentiel et

n est l'indice du milieu de propagation.

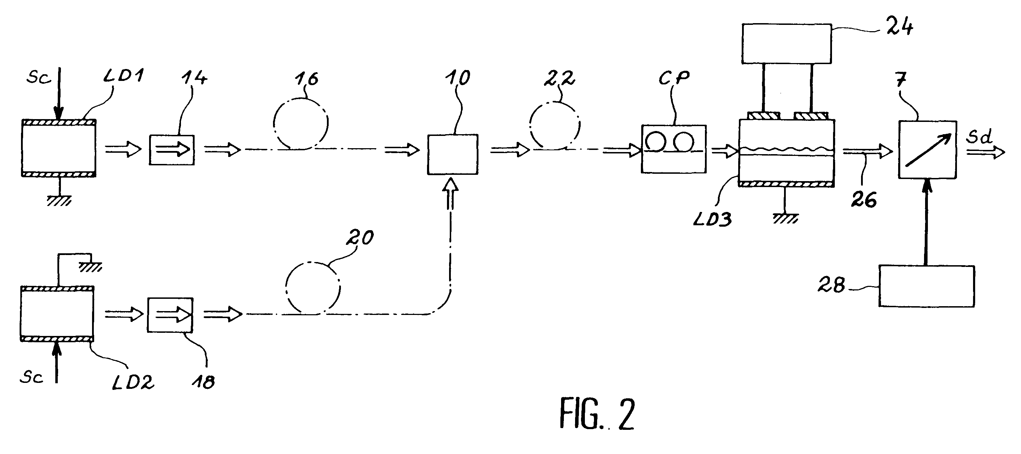

Le signal Sc obtenu à la sortie de l'interféromètre 3 est injecté dans un générateur 9 de fonctions logiques optiques. Ce générateur comporte un convertisseur 5 AM/FM associé à un filtre optique. Le convertisseur 5 permet notamment de convertir les signaux modulés en amplitude provenant de l'interféromètre 3 en des signaux modulés en fréquence. Ce convertisseur 5 est, de préférence, de type laser. Un mode de réalisatin du générateur 9 de fonctions logiques est représenté sur la figure 2. Ce générateur de fonctions logiques est capable de fournir à sa sortie une fonction logique, sous forme optique, qui est reconfigurable, c'est-à-dire que l'on peut choisir cette fonction logique parmi plusieurs fonctions logiques réalisables avec ce générateur.

Pour ce faire, ce générateur utilise une transposition optique dans une diode laser à contre-réaction distribuée qu'il comporte, ainsi qu'un filtre optique 7 accordable en fréquence. Une telle transposition optique est décrite dans le document :"Wavenlength conversion for FM light using light injection induced frequency shift in DFB-LD", de K INOUE et N. TAKA-TO, publié dans Electronics Letters, 28 September 1989, vol. 25, n° 20, p. 1360-62.

On a représenté schématiquement, sur la figure 2, un mode de réalisation particulier de ce générateur de fonctions logiques. Il comprend :

- deux diodes lasers monomodes LD1 et LD2,

- un coupleur optique 10 à deux entrées et une sortie (coupleur de type "2 vers 1"),
- une diode laser à contre-réaction distribuée LD3, et
- un filtre optique 7 qui est accordable en fréquence.

La diode laser LD1, à la sortie de laquelle est placé un isolateur optique 14, est reliée par une fibre optique 16 à une entrée du coupleur optique 10.

De même, la diode laser LD2, à la sortie de laquelle est placé un isolateur optique 18, est reliée par une fibre optique 20 à l'autre entrée du coupleur optique 10.

La lumière susceptible d'être fournie par la sortie du coupleur optique 10 est envoyée à la diode laser LD3 par l'intermédiaire d'une fibre optique 22 et injectée dans la couche active de cette diode laser LD3.

La diode laser LD3, qui comporte deux électrodes de polarisation, est munie de moyens de commande 24 prévus pour envoyer respectivement à ces électrodes deux courants de polarisation constants, choisis de façon à ce que la diode laser LD3 soit monomode et fournisse en sortie un faisceau laser 26.

A la place de la diode laser LD3 à deux électrodes, on pourrait utiliser une diode laser à contre-réaction distribuée à une seule électrode de polarisation, mais il faudrait alors lui faire subir un traitement anti-reflet pour la rendre monomode (au cas où elle ne le serait pas).

Tant que la diode laser LD3 ne reçoit aucun signal lumineux en provenance du coupleur optique 10, la longueur d'onde du faisceau lumineux de sortie 26 est la longueur d'onde de repos LO de la diode laser LD3.

La fréquence optique correspondant à cette longueur d'onde LO est notée F1.

Le filtre optique 7, qui est accordable en fréquence, est placé à la sortie de la diode laser LD3 et prévu pour sélectionner une fréquence optique parmi les fréquences optiques des signaux lumineux susceptibles d'être fournis par la diode laser LD3.

Ce filtre optique 7 peut être commandé par des moyens appropriés 28.

Les diodes lasers LD1 et LD2 sont respectivement commandées par le signal Sc provenant de l'interféromètre 3.

Les diodes lasers LD1 et LD2 étant commandées par un même signal, elles émettent respectivement des signaux optiques numériques S1 et S2 qui sont synchrones et ont le même débit.

Ces signaux optiques sont mélangés par le coupleur optique 10 et sont injectés simultanément dans la couche active de la diode laser LD3.

On précise qu'un contrôleur de polarisation CP est placé à l'entrée de la diode laser LD3 afin de donner aux signaux S1 et S2 sortant de la fibre optique 22 une direction de polarisation située dans le plan de polarisation de la diode laser LD3 (plan de la couche active de cette diode laser LD3).

Chacun des signaux optiques S1 et S2 est une suite de niveaux hauts (niveaux logiques 1) et de niveaux bas (niveaux logiques 0).

La puissance lumineuse injectée dans la diode laser LD3 varie au cours du temps.

Trois cas se présentent :

a) deux niveaux logiques 0, provenant respectivement des diodes lasers LD1 et LD2, arrivent simultanément sur la diode laser LD3,

b) un niveau logique 0, provenant de l'une des diodes lasers LD1 et LD2, et un niveau logique 1, provenant de l'autre de ces diodes lasers LD1 et LD2, arrivent simultanément sur la diode laser LD3, et

c) deux niveaux logiques 1, provenant respectivement des diodes lasers LD1 et LD2, arrivent simultanément sur la diode laser LD3.

Dans le cas a), la puissance lumineuse injectée dans la diode laser LD3 est nulle.

En conséquence, la fréquence optique du faisceau lumineux 26 émis par cette diode laser LD3 est la fréquence de repos FO de la diode laser LD3.

Dans le cas b), la puissance lumineuse injectée dans cette diode laser LD3 n'est pas nulle et la fréquence du signal lumineux fourni par la diode laser LD3 glisse jusqu'à une valeur F2 supérieure à F1.

Enfin, dans le cas c), la puissance lumineuse injectée dans la diode laser LD3 est la puissance lumineuse maximale que l'on puisse obtenir avec les signaux S1 et S2.

La fréquence optique du signal lumineux 26 fourni par la diode laser LD3 glisse, dans ce cas c), jusqu'à une valeur F3 supérieure à F2.

On obtient donc, à la sortie de la diode laser LD3, un signal optique numérique dont la fréquence optique passe successivement de l'une des valeurs F1, F2 et F3 à une autre de ces valeurs au cours d'un temps t.

Ainsi, le signal optique numérique Sd que l'on obtient à la sortie du filtre optique 7 accordable en fréquence est fonction de ce que le filtre optique a sélectionné comme fréquence : la fréquence F1, la fréquence F2 ou la fréquence F3.

Aussi, le filtre optique 7 permet de sélectionner l'une des trois fonctions logiques ET (AND dans les articles en langue anglaise), NON ET (NAND dans les articles en langue anglaise) et OU EXCLUSIF (XOR dans les articles en langue anglaise).

Plus précisément, lorsque la fréquence F1 est sélectionnée, le signal optique numérique Sd fourni par le filtre optique 7 correspond à la fonction logique NON ET.

Lorsque la fréquence F2 est sélectionnée, ce signal optique numérique Sd correspond à la fonction logique OU EXCLUSIF.

Enfin, lorsque la fréquence F3 est sélectionnée ce signal optique numérique Sd correspond à la fonction logique ET.

On dispose ainsi d'un générateur de fonctions logiques optiques qui est remarquable par le fait que cette fonction logique est reconfigurable, c'est-à-dire peut être choisie parmi plusieurs fonctions logiques suivant la fréquence optique sélectionnée par le filtre optique accordable en fréquence 7.

Ce filtre optique 7 accordable en fréquence peut être un interféromètre de Perot Fabry accordable.

Dans un autre mode de réalisation particulier, le filtre optique accordable en fréquence 7 est constitué par une diode laser auxiliaire à contre-réaction distribuée qui est polarisée au-dessous de son courant de seuil par des moyens appropriés.

Cette diode laser auxiliaire comporte deux électrodes de polarisation et c'est en réglant la valeur des courants de polarisation respectivement fournis par des moyens appropriés que l'on choisit la valeur de la fréquence sélectionnée par cette diode laser auxiliaire formant le filtre optique.

Au sujet d'une telle diode laser formant un filtre optique on pourra par exemple consulter le document suivant :

*Demande de brevet français n° 90 06 926 du 5 juin 1990, "Système de transmission bidirectionnelle à composants lasers identiques".*

Le signal Sd fourni sur la sortie 5b du convertisseur 5 est donc un signal modulé en fréquence sur trois fréquences F1, F2, F3, dont la durée temporelle des états n'a pas subi de modifications.

Ce signal Sd est alors introduit dans le filtre optique 7 par l'entrée 7a dudit filtre qui est connecté sur la sortie 5b du convertisseur 5. Ce filtre optique peut, par exemple, être ajusté sur la fréquence F2 afin que le générateur 9 de fonctions logiques établisse la fonction OU-EXCLUSIF.

Selon une application de ce dispositif de l'invention, on cherche à récupérer l'horloge à partir d'un signal codé par le code NRZ. Pour récupérer l'horloge d'un tel signal, la fonction logique optique à établir est la fonction OU-EXCLUSIF. Cette fonction OU-EXCLUSIF est réalisée en ajustant le filtre optique 7 sur la fréquence F2 du signal SD introduit dans ledit filtre optique 7.

Selon un autre exemple, le générateur 9 de fonctions logiques peut établir la fonction logique ET afin de récupérer l'horloge d'un signal codé par un code biphase.

Aussi, le signal Se fourni par la sortie 7b du filtre 7 répond aux conditions nécessaires pour permettre la mise en oeuvre du circuit de récupération du rythme du signal codé. Ces conditions sont, comme cela a été donné précédemment, que le signal Se qui est une série d'impulsions, ait des impulsions de durée égale à la demi-période horloge T/2 et d'occurrence variable égale N x T, où le coefficient N est un nombre entier variable dans le temps et dont la valeur maximale dépend essentiellement du code du signal codé introduit dans le circuit 1.

Sur la figure 3, on a représenté schématiquement le circuit de récupération du rythme du signal codé. Ce circuit de récupération du rythme est référencé 19 ; on parlera donc du circuit 19.

Ce circuit 19 de récupération du rythme est connecté sur la sortie 7b du circuit 1 de mise en forme du signal codé. Ce circuit 19 comporte un coupleur 2 vers 2. Préférentiellement, ce coupleur est réalisé en fibres optiques, de façon à permettre la continuité de la propagation du signal optique Se obtenu en sortie du circuit 1 de mise en forme.

Ce coupleur 2 vers 2, référencé 11 sur la figure 3, comporte une première et une seconde entrée, respectivement 11a et 11b, et une première et une seconde sortie, respectivement 11c et 11d. L'entrée 11a reçoit le signal provenant de la sortie du circuit 1 de mise en forme.

Ce signal est référencé Sf sur la figure 3 ; il correspond au signal Se de la figure 1 ; il porte cependant une référence différente de façon à assurer une cohérence entre les signaux Sf et Sg de la figure 3 qui sont représentés, sur la figure 4, dans un repère temporel différent du signal référencé Se.

La sortie 11d du circuit 11 de récupération d'horloge fournit le signal Sg correspondant au signal d'horloge recherché. La sortie 11c du coupleur 11 est connectée sur l'entrée 11b de ce coupleur, afin de réaliser une boucle de contre-réaction. Un amplificateur 13 et un filtre optique 15 sont connectés en série l'un avec l'autre dans la boucle de contre-réaction, c'est-à-dire qu'ils sont connectés après la sortie 11c et avant l'entrée 11b du coupleur. Cette association de l'amplificateur 13 et du filtre optique 15 a pour avantage de permettre d'ajuster la longueur de la boucle de contre-réaction, de façon à ce que le temps de propagation du signal optique dans ladite boucle de contre-réaction soit égal à la période T de l'horloge que l'on cherche à récupérer.

Ainsi, à la sortie 11d du coupleur 11, sont récupérées, à intervalles réguliers, des fractions du signal se propageant dans la boucle de contre-réaction. Ces fractions de signal forment le signal d'horloge (nommé aussi signal de rythme) recherché.

Lorsque le signal codé Si comporte de longues suites de "0" ou de "1", l'espacement entre deux impulsions du signal Se entrant dans le coupleur 11 peut conduire à une variation relativement importante du niveau des impulsions du signal Sg obtenu en sortie du coupleur 11. Avant de palier à ces variations, un égaliseur optique 17 est connecté sur la sortie 11d du coupleur 11. Cet égaliseur optique 17, est, selon un mode de réalisation, un amplificateur optique similaire à l'amplificateur 13 utilisé dans la boucle de contre-réaction. La non-linéarité de la courbe de gain de cet amplificateur 17, lorsqu'il fonctionne en saturation, permet de corriger la variation d'amplitude des impulsions du signal Sg. Le signal obtenu en sortie de cette égaliseur optique 17 est référencé Sg'.

De préférence, on utilise, dans le dispositif de l'invention, des amplificateurs optiques 13 et 17 du type amplificateur optique à semi-conducteur dont le temps de propagation est inférieur à 5 picots/seconde.

Sur la figure 4, on a représenté la différents signaux obtenus au cours du traitement par le dispositif de l'invention. Le signal représenté en A est le signal Sa qui est l'un des signaux des deux trajets de l'interféromètre 3. Le signal Sb est le signal obtenu pour le second trajet de l'interféromètre 3. Ce signal Sb, représenté en B, est décalé d'une demi-période par rapport au signal représenté en A. Cette demi-période T/2 équivaut au retard R attribué par l'interféromètre 3 sur le signal circulant dans le trajet Tb par rapport au signal circulant dans le trajet Ta. De façon plus précise, ces signaux Sa et Sb, représentés respectivement en A et B, sont sensiblement identiques au signal codé Si mais décalés dans le temps d'une demi-période pour le signal Sb.

Le signal représenté en C, c'est-à-dire le signal Sc obtenu en sortie de l'interféromètre 3, est un signal résultant de la somme des signaux Sa et Sb. Ce signal Sc est un signal modulé en amplitude selon trois niveaux A1, A2, A3, comme cela est représenté sur la figure 4.

Le signal Sd représenté en D sur la figure 4 3 montre le signal obtenu en sortie du convertisseur 5, c'est-à-dire qu'il montre le signal modulé en fréquence. Ce signal Sd comporte trois niveaux de fréquence, F1, F2, F3 ; les états de ce signal Sd sont identiques du point de vue durée temporelle à ceux du signal Sc modulés en amplitude.

Le signal Se représenté en E sur la figure 4, montre le signal obtenu en sortie du circuit 1 de mise en forme du signal codé. Ce signal Se est le signal que l'on obtient après ajustement sur la fréquence F2 par le filtre optique 7. Ce signal Se est donc modulé en fréquence selon deux niveaux, F1 et F2.

Les signaux Sf et Sg représentés en F et en G correspondent aux signaux que l'on a en entrée et en sortie du circuit 11 de récupérationd'horloge. Le signal Sf représenté en F représente le même signal que le signal Se, mais dans un repère de temps différent de celui de Se. En effet, les signaux représentés en F et G illustrent les signaux que l'on obtiendrait sur un oscillateur placé en entrée et en sortie du circuit 19 de récupération d'horloge. Ainsi, le signal Sf illustre les impulsions obtenues en sortie du circuit 1 de mise en forme du signal codé.

Le signal Sg, représenté en G, montre le signal d'horloge obtenu en sortie du coupleur 11, c'est-à-dire le signal d'horloge recherché.

On remarque sur ce signal Sg représenté en G de la figure 4, que l'amplitude du signal diminue entre deux passages successifs. Ce phénomène s'explique par le fait que l'on doit maintenir le gain de boucle de la boucle de contre-réaction inférieur à 1, afin d'éviter tout accrochage (c'est-à-dire toute oscillation non désirée) de l'amplificateur optique 13 de la boucle de contre-réaction. Le filtre optique 15 qui élimine en partie l'émission spontanée permet, notamment, de relever le seuil d'accrochage et donc, par conséquent, d'améliorer le gain de boucle et de limiter la variation d'amplitude entre deux impulsions successives. L'amplitude des signaux est également modifiée par la superposition des impulsions circulant simultanément dans la boucle de contre-réaction, ce qui se produit lorsque le temps d'occurrence des impulsions injectées est inférieur au temps d'amortissement. En effet, lorsque le temps séparant deux impulsions du signal Sf entrant dans le coupleur 11 et celui du trajet de la boucle de contre-réaction sont rigoureusement identiques, on observe un bruit de battement relativement important. Un recouvrement entre les impulsions est alors engendré dans la boucle par la rotation des impulsions d'entrée N et N+1. Ce recouvrement tient au fait que l'espacement entre ces deux impulsions N et N+1 est inférieur au temps d'amortissement de la boucle de contre-réaction. Le photodétecteur recevant simultanément les deux impulsions N et N+1, la détection est de type self-homodyne, ce qui engendre le bruit de battement. Ce bruit de battement n'a pas de conséquence dans le cas de la récupération d'horloge. Cependant, lorsque l'on désire observer le signal, une conversion optique-électrique est nécessaire ; pour assurer une bonne conversion, il est important de supprimer ce bruit de battement. Aussi, afin de supprimer ce bruit de battement, on introduit un léger désaccord temporel entre le temps séparant les deux impulsions N et N+1, et le temps de trajet dans la boucle de contre-réaction.

## Revendications

1. Dispositif optique de récupération du rythme d'un signal codé (Si) par un code numérique et transmis audit dispositif au moyen de liaisons en fibres optiques, caractérisé en ce qu'il comporte :
   - un circuit (1) de mise en forme du signal codé apte à transcrire ledit signal codé sous la forme d'une série d'impulsions (Se)
     . de durée égale à T/2, où T est une période du rythme du signal codé et ,
     . d'occurence égale à NxT, où N est un nombre entier variant en fonction du code numérique codant le signal codé, ce circuit comportant une entrée apte à recevoir le signal codé, un interféromètre (3) de retard R=NxT/2 pour transformer le signal codé en un signal modulé en amplitude et une sortie apte à fournir la série d'impulsions; et
   - un circuit (19) de récupération du rythme

. qui comprend une première et une seconde entrées (11a, 11b) et une première et une seconde sorties (11c, 11d), la première entrée étant connectée sur la sortie du circuit de mise en forme et la première sortie étant connectée sur la seconde entrée pour former une boucle de contre-réaction, et

. qui est apte à déterminer, pour chaque période du rythme, une fraction du signal se propageant dans la boucle de contre-réaction pour fournir, sur la seconde sortie, cette fraction de signal correspondant à un signal de rythme.

2. Dispositif selon la revendication 1, caractérisé en ce que l'interférométre est un interféromètre de MACH-ZEHNDER, réalisé en fibres optiques.

3. Dispositif selon la revendication 1 ou 2, caractérisé en ce que le circuit de mise en forme du signal codé comporte un convertisseur (5) AM/FM associé en série à l'interféromètre, pour convertir le signal modulé en amplitude en un signal modulé en fréquence.

4. Dispositif selon la revendication 3, caractérisé en ce que le convertisseur AM/FM est un convertisseur laser.

5. Dispositif selon la revendication 3 ou 4, caractérisé en ce que le circuit de mise en forme du signal codé comporte un filtre optique (7) associé en série au convertisseur AM/FM, et apte à être ajusté sur l'une des fréquences du signal modulé en fréquence pour assurer l'établissement de fonctions logiques, le choix de la fonction logique à établir dépendant du code numérique du signal codé.

6. Dispositif selon l'une quelconque des revendications 1 à 5, caractérisé en ce que le circuit de récupération du rythme comporte un coupleur deux vers deux (11) permettant d'introduire les impulsions provenant du circuit de mise en forme du signal codé et de réaliser la boucle de contre-réaction.

7. Dispositif selon la revendication 6, caractérisé en ce que le coupleur deux vers deux est réalisé en fibres optiques.

8. Dispositif selon la revendication 6 ou 7, caractérisé en ce que le circuit de récupération du rythme comporte un amplificateur (13) et un filtre optique (15) associés en série dans la boucle de contre-réaction.

9. Dispositif selon l'une quelconque des revendications 1 à 8, caractérisé en ce qu'il comporte un égaliseur (17) optique connecté sur la seconde sortie du circuit de récupération.

FIG.1

FIG. 3

FIG. 2

EP 0 618 698 A1

FIG. 4

EP 0 618 698 A1

**Office européen des brevets**

**RAPPORT DE RECHERCHE EUROPEENNE**

Numero de la demande
EP 94 40 0645

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| Y | PATENT ABSTRACTS OF JAPAN vol. 015, no. 116 (P-1182) 20 Mars 1991 & JP-A-03 006 541 (MATSUSHITA ELECTRIC) * abrégé * | 1,2,6-9 | H04L7/00 |
| Y | PATENT ABSTRACTS OF JAPAN vol. 012, no. 449 (E-686) 25 Novembre 1988 & JP-A-63 177 626 (NTT) * abrégé * | 1,2,6-9 | |
| A | IEEE PHOTONICS TECHNOLOGY LETTERS, vol.4, no.6, Juin 1992, NEW YORK, US pages 592 - 593, XP275545 Hansen P B et al 'A dual-drive Ti:LiNbO3 Mach-Zehnder modulator used as an optoelectronic logic gate for 10-Gb/s simultaneous multiplexing and modulation' * page 592, colonne de gauche, ligne 24 - colonne de droite, ligne 1 * * page 593, colonne de gauche, ligne 33 - colonne de droite, ligne 2; figure 3C * | 1,2 | |
| A | PATENT ABSTRACTS OF JAPAN vol. 013, no. 409 (P-931) 11 Septembre 1989 & JP-A-01 150 121 (NTT) * abrégé * | 1,6-9 | **DOMAINES TECHNIQUES RECHERCHES (Int.Cl.5)** H04L |
| D,A | ELECTRONICS LETTERS., vol.25, no.20, 28 Septembre 1989, STEVENAGE GB K. INOUE ET AL. 'WAVELENGTH CONVERSION FOR FM LIGHT USING LIGHT INJECTION INDUCED FREQUENCY SHIFT IN DFB-LD' * page 1361, colonne de gauche, ligne 21 - ligne 38; figure 1 * | 2-5 | |

-/--

Le présent rapport a été établi pour toutes les revendications

| Lieu de la recherche | Date d'achèvement de la recherche | Examinateur |
|---|---|---|
| LA HAYE | 8 Juillet 1994 | Pieper, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

Office européen
des brevets

**RAPPORT DE RECHERCHE EUROPEENNE**

Numero de la demande

EP 94 40 0645

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | FR-A-2 681 747 (THOMSON-CSF)<br>* revendications 1,2; figures 1A,1B *<br>* page 1, ligne 10 - page 2, ligne 10 *<br>--- | 1,9 | |
| A | EP-A-0 198 701 (NEC)<br>* page 5, ligne 17 - page 6, ligne 23 *<br>* page 8, ligne 1 - ligne 8; figures 3,4,6 *<br>--- | 1 | |
| A | FIRST EUROPEAN SIGNAL PROCESSING CONFERENCE, 16 Septembre 1980, LAUSANNE , CH<br>pages 551 - 556<br>A.E. MOGHAZY ET AL. 'A SMALL ACQUISITION TIME DIGITAL SELF BIT SYNCHRONIZER AND DATA DETECTOR'<br>* page 551, colonne de droite, ligne 1 - page 552, colonne de gauche, ligne 41; figures 1,2A,2B *<br>----- | 1 | |
| | | | **DOMAINES TECHNIQUES RECHERCHES (Int.Cl.5)** |

Le présent rapport a été établi pour toutes les revendications

| Lieu de la recherche | Date d'achèvement de la recherche | Examinateur |
|---|---|---|
| LA HAYE | 8 Juillet 1994 | Pieper, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)